# EUROPEAN PATENT APPLICATION

(11) **EP 2 416 512 A1**
(43) Date of publication of application: **08.02.2012**
(21) Application number: 10171861.7
(22) Date of filing: 04.08.2010
(51) Int. Cl.: H04J 14/02, H04B 10/155

(54) **Optical communication method and apparatus**

(71) Applicant: Nokia Siemens Networks Oy, 02610 Espoo (FI)
(72) Inventor: Jansen, Sander, 81379, Munich (DE); Van Den Borne, Dirk, 81379, München (DE)

(57) **Abstract**

A method and an apparatus for an optical communication system are provided, the method comprising the steps of generating a first optical signal and a second optical signal, multiplexing the first optical signal in a first optical channel and a second optical signal in a second optical channel, the first and the second optical channels being spectrally separated neighboring channels, measuring the level of out-of-band optical power associated with the second optical channel and frequency shifting the second optical channel when a frequency drift of the first optical channel occurs, so that the level of out-of-band optical power associated with the second optical channel is held constant.

## Description

### FIELD OF THE INVENTION

The invention refers to a method and to an apparatus for signal processing in a communication system (e.g. an optical communication system).

### BACKGROUND OF THE INVENTION

Orthogonal frequency diversity multiplex (OFDM) is a promising modulation technique well known from wireless and wired communication systems.

Since a few years OFDM has been proposed for fiber-optic communication systems and has found many potential applications varying from the access to (ultra) long-haul networks. OFDM offers many advantages that make it interesting for the use of fiber-optic applications such as negligible linear crosstalk, scalability to higher order modulation formats, etc. Because of the narrow and well defined spectrum of the OFDM signal, the guard band between OFDM signals can be significantly smaller than that of single carrier signals. In the literature, OFDM signals with an extremely small guard band in between wavelength-division-multiplexed (WDM) signals are often referred to as "continuous OFDM" as the guard band is negligible compared to the signal bandwidth. Continuous OFDM allows a more effective use of the Erbium Doped Fiber Amplifier (EDFA) bandwidth thereby increasing the spectral efficiency.

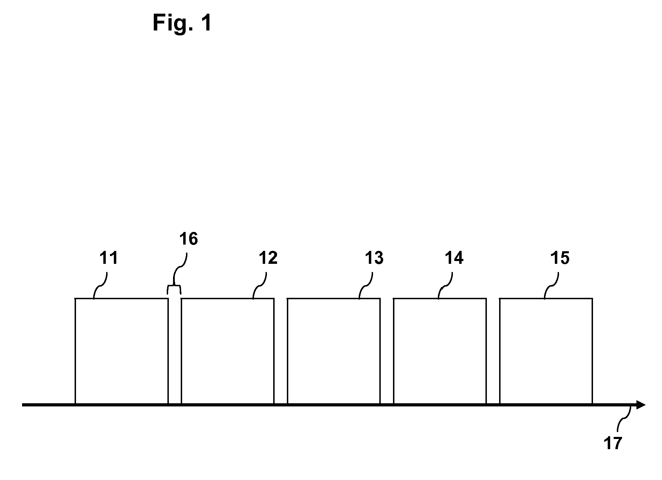

**Fig. 1** is a schematic representation of a conventional continuous OFDM communication system. In the frequency domain 17 the spectrum of five OFDM signals (namely OFDM signal 11, OFDM signal 12, OFDM signal 13, OFDM signal 14 and OFDM signal 15) is shown. The OFDM signals are multiplexed in five closely spaced incoherent WDM channels, separated by a small guard band 16.

The main problem of conventional continuous OFDM communication systems is that the frequency stability of the lasers is limited and this can cause neighboring OFDM signals to drift, resulting in spectral overlap and a break down of signal quality (e.g. linear crosstalk).

Several methods are known in the art to prevent spectrally overlap of neighboring channels in continuous OFDM communication systems.

According to one of these known methods the frequency stability of the laser can be increased to avoid the overlap of the neighboring OFDM channels. However, laser frequency tends to be temperature dependent, and commercial transmission systems need to be qualified over a wide temperature range. Therefore lasers with increased frequency stability are immensely complex and expensive and not a realistic solution for commercial optical transmission systems, in which lasers need to have a small form factor and must be cost effective.

According to another of these known methods the guard band between the OFDM signals can be increased in such a way that it can be larger than the laser drift of conventional lasers. The main disadvantage of this solution is that increasing the guard band reduces the feasible spectral efficiency, which nullifies any advantage gained from using continuous OFDM over the currently deployed transmission systems.

According to another of these known methods a coherent light source can be used to avoid the overlap of the neighboring OFDM channels. There exist several methods to create frequency tones that are spectrally locked, but all of these methods are relatively complex and expensive. Furthermore, in a commercial system the implementation would be rather difficult as all transponders must be interconnected to distribute the coherent light source. The use of coherent laser sources is as well not compatible with meshed networks, where neighboring signals can originate from different locations.

The problem to be solved is to avoid the disadvantages mentioned above and in particular to prevent spectrally overlap of neighboring channels in continuous OFDM communication systems. A cost efficient technique is needed that benefits from the spectral efficiency of continuous OFDM communication systems without the complexity of coherent light sources and being at the same time easy to implement and compatible with meshed networks.

### SUMMARY OF THE INVENTION

In order to overcome the above-described need in the art, the present invention discloses a method for an optical communication system, the method comprising the steps of generating a first optical signal and a second optical signal, multiplexing the first optical signal in a first optical channel and a second optical signal in a second optical channel, the first and the second optical channels being spectrally separated neighboring channels, measuring the level of out-of-band optical power associated with the second optical channel and frequency shifting the second optical channel when a frequency drift of the first optical channel occurs, so that the level of out-of-band optical power associated with the second optical channel is held constant.

It is also an embodiment, that the first and the second optical signals are orthogonal frequency division multiplexing (OFDM) signals.

In other alternative embodiments of the present invention, for the first and the second optical signals various optical modulation formats, which allow the measurement of the out of band signal power, may be employed.

In a further embodiment, the first and the second optical channels are wavelength-division-multiplexed (WDM) channels.

In other embodiments of the present invention, the first and the second optical channels are separated by a guard band.

It is also an embodiment, that the method for an optical communication system further comprises the step of combining the first optical signal with the second optical signal.

In a next embodiment, the step of measuring the level of out-of-band optical power associated with the second optical channel is performed before the step of combining the first optical signal with the second optical signal.

In an alternative embodiment, the step of measuring the level of out-of-band optical power associated with the second optical channel is performed after the step of combining the first optical signal with the second optical signal.

It is also an embodiment, that the method for an optical communication system further comprises the step of modulating the first optical signal and the second optical signal.

In other embodiments of the present invention, the step of measuring the level of out-of-band optical power associated with the second optical channel is performed before the step of modulating the first optical signal and the second optical signal.

In another alternative embodiment of the present invention, the step of measuring the level of out-of-band optical power associated with the second optical channel is performed after the step of modulating the first optical signal and the second optical signal.

In a next embodiment, the optical communication system includes a transmitting unit and a receiving unit.

In other embodiments of the present invention, the step of measuring the level of out-of-band optical power is performed within the transmitting unit.

It is also an embodiment, that the step of measuring the level of out-of-band optical power is performed within the receiving unit.

It is also an embodiment, that the method for an optical communication system further comprises the step of inserting a plurality of un-modulated subcarriers for oversampling.

In other embodiments of the present invention, the step of measuring the level of out-of-band optical power includes the step of measuring the level of the optical power of the un-modulated subcarriers.

In a further embodiment, the method for an optical communication system further comprises the step of sending a signal to the transmitting unit including information relating to the measured level of the out-of-band optical power.

In other embodiments of the present invention, the step of sending a signal to the transmitting unit including information relating to the measured level of the out-of-band optical power is performed over a surveillance channel.

The problem stated above is also solved by an apparatus for an optical communication system, the apparatus comprising an optical source unit configured to generate a first optical signal and a second optical signal, a multiplexing unit configured to multiplex the first optical signal in a first optical channel and a second optical signal in a second optical channel, the first and the second optical channels being spectrally separated neighboring channels, means for measuring the level of out-of-band optical power associated with the second optical channel, and frequency control means for frequency shifting the second optical channel when a frequency drift of the first optical channel occurs, so that the level of out-of-band optical power associated with the second optical channel is held constant.

In a further embodiment, the apparatus for an optical communication system further comprises a transmitting unit, a receiving unit, and a control unit that is arranged such that the method according any of embodiments described above can be executed.

The method and the apparatus provided, in particular, bears the following advantages:
a) It prevents spectrally overlap of neighboring channels in continuous OFDM communication systems therefore substantially reducing the risk of linear crosstalk.
b) It allows the realization of continuous optical OFDM in a cost effective way, without the need for a coherent light source or complex integrated photonic circuits.
c) It allows a substantial reduction guard band between OFDM signals.
d) It is easy to implement.
e) It is compatible with meshed networks.

### BRIEF DESCRIPTION OF THE DRAWINGS

The invention is explained by way of example in more detail below with the aid of the attached drawings.
Fig. 1 is a schematic representation of a conventional continuous OFDM communication system.
Fig. 2 is a schematic representation of a semi-coherent transmission system according to an embodiment of the invention.
Fig. 3 is a schematic representation of a semi-coherent transmission system using a transmission-based frequency control according to an embodiment of the invention.
Fig. 4 is a schematic representation of a semi-coherent transmission system using a receiver-based frequency control according to an embodiment of the invention.
Fig. 5 is a schematic representation of a semi-coherent one-way transmission system using receiver-based frequency control according to an embodiment of the invention.
Fig. 6 is a schematic representation of a semi-coherent two-way transmission system using receiver-based frequency control according to an embodiment of the invention.

### DESCRIPTION OF THE INVENTION

As regards the description of Figures 1 to 4, reference is made to the background of the invention.

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

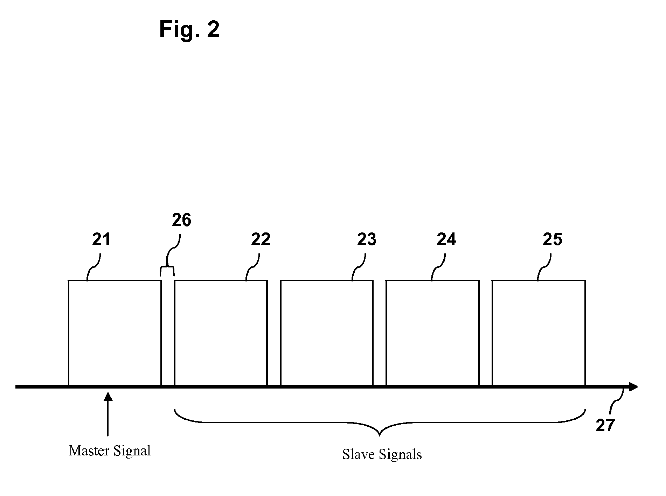

**Fig. 2** is a schematic representation of a semi-coherent transmission system according to an embodiment of the invention. In the frequency domain 27 the spectrum of five OFDM signals (namely OFDM signal 21, OFDM signal 22, OFDM signal 23, OFDM signal 24 and OFDM signal 25) is shown. The OFDM signals are multiplexed in five closely spaced incoherent WDM channels, separated by a small guard band 26. Multiple OFDM signals are generated and multiplexed together. One OFDM signal is assigned as the master signal and all other signals are so called slave signals. In the example shown in Fig. 2 the most left OFDM signal 21 is designated as master. OFDM signal 22 monitors the out of band optical power on the left side of the signal and keeps this value constant. When OFDM signal 21 drifts to a higher frequency (i.e. to the right), the out of band optical power will increase with OFDM signal 22 and, in order to reduce the out of band power to its original value, OFDM signal 22 will drift to a higher frequency as well. The same holds for signal 23 to 25. Similarly, when OFDM signal 21 drifts to a lower frequency, the out of band optical power will be reduced and all signals will gradually shift to lower frequencies (i.e. to the left).

Monitoring of the out of band signal power can be realized in several different ways. It's possible to monitor the out of band signal power directly at the transmitter, or alternatively it's possible to monitor the power at the receiver and send the information back to the transmitter in a close loop control.

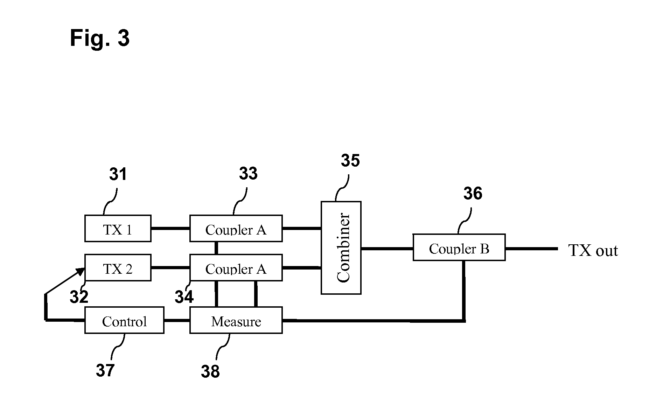

**Fig. 3** is a schematic representation of a semi-coherent transmission system using a transmission-based frequency control according to an embodiment of the invention. In particular Fig. 3 shows the operation of monitoring the out of band signal power at the transmitter for two transmitters 31 and 32. The monitoring can be performed either before (using couplers 33 and 34) or after combining the two OFDM signals (using coupler 36), the combination being performed by the combiner 35. Fig. 3 shows also a measuring unit 38 coupled with couplers 33 and 34, and a controlling unit 37.

In an alternative embodiment of the invention the frequency of the laser may be monitored before the modulator.

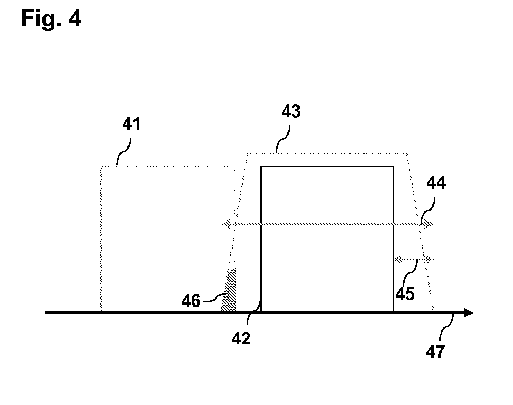

**Fig. 4** is a schematic representation of a semi-coherent transmission system using a receiver-based frequency control according to an embodiment of the invention. Fig. 4 shows the spectrum of OFDM signal 41, and of OFDM signal 42 in the frequency domain 47, together with the low pass filter characteristic 43 and the receiver sampling range 44. OFDM signal 41 is the master and runs without active frequency control. OFDM signal 42 needs to measure the out-of-band signal power to monitor the power 46 of OFDM signal 41 that leaks into the high frequency range of the receiver of OFDM signal 42. This can be realized by using the over-sampling 45 of the coherent receiver.

Most coherent-detection receivers need over-sampling in order to separate aliasing terms from the actual signal and to realize receiver -based equalization. The oversampling can be used as well to monitor the out of band signal power and with that the optical power of the neighboring OFDM signal 41.

In an OFDM signal oversampling can be realized by inserting un-modulated subcarriers. At the receiver the power of the out of band signal can be monitored by measuring the power in these unused subcarriers that are primarily used for oversampling. The power leakage of the neighboring OFDM signal into the unused subcarriers does not have impact on the performance.

By sending the out-of-band signal power information back to the transmitter over the optical surveillance channel, the distance of the two neighboring OFDM signals 41 and 42 can be controlled and semi-continuous OFDM can be realized.

Usually laser wavelength drift are slow enough (seconds timeframe) to allow the typical round trip time (milliseconds timeframe) of such a control loop implementation.

A simple and effective way to determine the master OFDM signal could be, for instance, to choose as master signal always the OFDM signal with the lowest or highest frequency. If for instance the OFDM signal with the lowest frequency is assigned as master and one additional OFDM signal is added at a lower frequency, the master signal will detect out of band frequency components on the left and automatically switch to slave mode. The added signal then can become the new master signal.

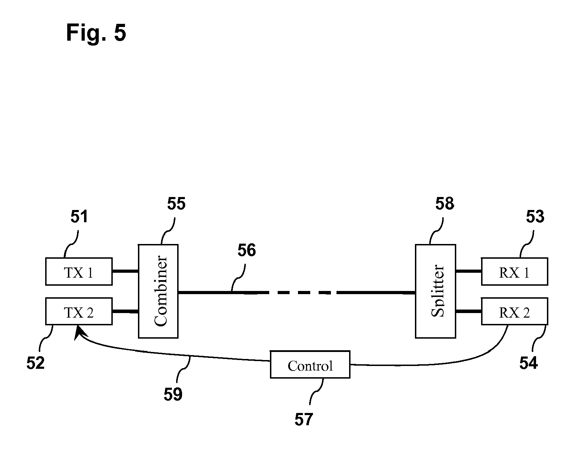

**Fig. 5** is a schematic representation of a semi-coherent one-way transmission system using receiver-based frequency control according to an embodiment of the invention. According to the embodiment shown in Fig. 5, a master OFDM signal, transmitted by the transmitter 51, can be combined with a slave OFDM signal transmitted by the transmitter 52 at the combiner 55. The combined signals may be transmitted over the transmission line 56. The transmitted signal may be split at the splitter 58 in two OFDM signals which are fed to the receivers 53 and 54. The master OFDM signal, received by the receiver 53, runs without active frequency control. The slave OFDM signal, received by the receiver 54, needs to measure the out-of-band signal power to monitor the power of the master OFDM signal that leaks into the high frequency range of the receiver 54. The out-of-band power information may be sent back to the transmitter 52 over an optical surveillance channel 59, and the distance between the master OFDM signal and the slave OFDM signal signals can be controlled by the control unit 57 and semi-continuous OFDM can be realized.

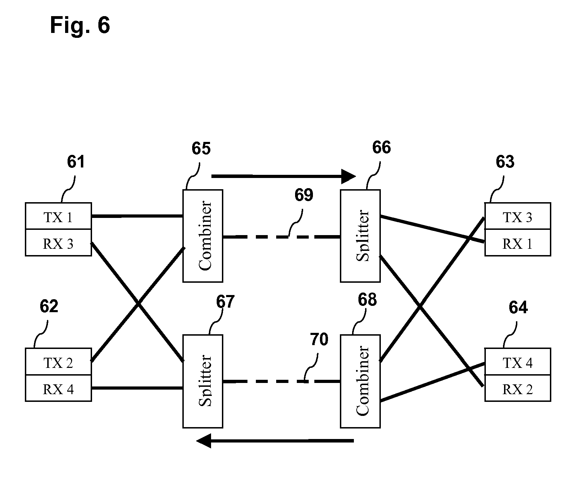

**Fig. 6** is a schematic representation of a semi-coherent two-way transmission system using receiver-based frequency control according to an embodiment of the invention. According to the embodiment shown in Fig. 6, a master OFDM signal, transmitted by the master optical transceiver unit 61, can be combined with a slave OFDM signal transmitted by the slave optical transceiver unit 62 at the combiner 65. The combined signals may be transmitted over the transmission line 69. The transmitted signal may be split at the splitter 66 in two OFDM signals which are fed to the optical transceiver unit 63 and 64.

The optical transmitters included in the optical transceiver units 63 and 64 are aligned to the center of the detected OFDM band received spectrum. In this way the optical transmitters just "copy" the received center frequency. The master OFDM signal, received by the receiver 53, runs without active frequency control. In the back propagation path over the transmission line 70 the master and the slave OFDM signals are first combined by the combiner 68 and then split by the splitter 67, so that the master OFDM signal can be fed to the master optical transceiver unit 61 and the slave OFDM signal can be fed to the slave optical transceiver unit 62. The slave OFDM signal, received by the slave optical transceiver unit 62, needs to measure the out-of-band signal power to monitor the power of the master OFDM signal that leaks into the high frequency range of the slave optical transceiver unit 62. The out-of-band power information may be used by the slave optical transceiver unit 62 itself to control the distance between the master OFDM signal and the slave OFDM signal signals.

Using the semi-coherent continuous OFDM implementation laser requirements can be significantly relaxed. Especially with the receiver-based frequency control a cost effective continuous OFDM system can be realized. The receiver-based frequency control is an implementation that requires no additional complexity at the transmitter and at the receiver compared to conventional WDM transmission. Nonetheless the semi-coherent structure allows the guard band between OFDM signals to be reduced from ∼10 GHz to ∼500 MHz or even less. In next generation transmission systems it is foreseen that data rates of 400 Gb/s or even 1 Tb/s are required. Semi-coherent continuous OFDM could be the enabling technology to realize such data rates.

The present invention is not limited to the details of the above described principles. The scope of the invention is defined by the appended claims and all changes and modifications as fall within the equivalents of the scope of the claims are therefore to be embraced by the invention. Mathematical conversions or equivalent calculations of the signal values based on the inventive method or the use of analogue signals instead of digital values are also incorporated.

### List of Abbreviations:

- EDFA: Erbium Doped Fiber Amplifier
- OFDM: Orthogonal frequency diversity multiplex
- WDM: Wavelength Division Multiplexing

## Claims

1. A method for an optical communication system, the method comprising:
generating a first optical signal and a second optical signal;
multiplexing the first optical signal (21, 41) in a first optical channel and a second optical signal (22, 42) in a second optical channel, the first and the second optical channels being spectrally separated neighboring channels;
**characterized in that**:
measuring the level of out-of-band optical power associated with the second optical channel;
frequency shifting the second optical channel when a frequency drift of the first optical channel occurs, so that the level of out-of-band optical power associated with the second optical channel is held constant.

2. Method according to claim 1, the first (21, 41) and the second (22, 42) optical signals being orthogonal frequency division multiplexing (OFDM) signals.

3. Method according to any of the preceding claims, the first (21, 41) and the second (22, 42) optical channels being wavelength-division-multiplexed (WDM) channels.

4. Method according to any of the preceding claims, the first and the second optical channels being separated by a guard band (26).

5. Method according to any of the preceding claims, further comprising
combining the first optical signal (21, 41) with the second optical signal (22, 42);

6. Method according to any of the preceding claims, further comprising
modulating the first optical signal (21, 41) and the second optical signal (22, 42).

7. Method according to any of the preceding claims, the optical communication system including a transmitting unit (31, 32, 51, 52, 61, 62, 63, 64) and a receiving unit (53, 54, 61, 62, 63, 64).

8. Method according to claim 7, wherein measuring the level of out-of-band optical power is performed within the transmitting unit (32, 38).

9. Method according to claim 7, wherein measuring the level of out-of-band optical power is performed within the receiving unit (54, 62).

10. Method according to claim 9, further comprising:
inserting a plurality of un-modulated subcarriers for oversampling (45).

11. Method according to claim 10, wherein measuring the level of out-of-band optical power includes measuring the level of the optical power of the un-modulated subcarriers.

12. Method according to claim 9 or 11, further comprising:
sending a signal to the transmitting unit including information relating to the measured level of the out-of-band optical power.

13. Method according to claim 12, wherein sending a signal to the transmitting unit including information relating to the measured level of the out-of-band optical power is performed over a surveillance channel (59).

14. An apparatus for an optical communication system, the apparatus comprising:
an optical source unit (31, 51, 61) configured to generate a first optical signal (21, 41) and a second optical signal (22, 42);
a multiplexing unit (35, 55, 65, 68) configured to multiplex the first optical signal (21, 41) in a first optical channel and a second optical signal (22, 42) in a second optical channel, the first and the second optical channels being spectrally separated neighboring channels;
**characterized in that**:
means for measuring (38, 54, 62) the level of out-of-band optical power associated with the second optical channel;
frequency control means for frequency shifting the second optical channel when a frequency drift of the first optical channel occurs, so that the level of out-of-band optical power associated with the second optical channel is held constant.

15. Apparatus according to claim 14, further comprising a transmitting unit (31, 32, 51, 52, 61, 62, 63, 64);
a receiving unit (53, 54, 61, 62, 63, 64); and
a control unit (37, 57) that is arranged such that the method according any of claims 1 to 13 can be executed.
